(19) Europäisches Patentamt / European Patent Office / Office européen des brevets

(11) EP 4 703 990 A1

(12) **EUROPEAN PATENT APPLICATION**

(43) Date of publication:
04.03.2026 Bulletin 2026/10

(21) Application number: 24197784.2

(22) Date of filing: 01.09.2024

(51) International Patent Classification (IPC):
*G06Q 10/0633* (2023.01)

(52) Cooperative Patent Classification (CPC):
G06Q 40/12; G06Q 10/0633; G06Q 10/067;
G06Q 10/103; G06Q 30/0637; G06Q 40/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Celonis SE
80333 München (DE)

(72) Inventors:
• **Goulart Rocha, Eduardo**
**80333 München (DE)**
• **Van der Aalst, Wil**
**80333 München (DE)**

(74) Representative: **2s-ip Schramm Schneider**
**Bertagnoll**
**Patent- und Rechtsanwälte Part mbB**
**Denninger Straße 169**
**81925 München (DE)**

(54) **METHOD OF MINING BEHAVIORAL PATTERNS FOR CONFORMANCE DIAGNOSTICS**

(57)    Computer-implemented method of performing conformance diagnostics of traces of an event log with a net representing a model of a process, the process comprising predetermined steps, the process comprising predetermined allowed variants of sequences of activities, the event log comprising traces, each trace being representative of a sequence of observed activities, the traces being representative of actual sequences of activities, each activity being a step of the process, the net being representable by a la-beled accepting Petri net, comprising:

- Instantiating a predetermined set of candidate constraints out of a library comprising predefined templates of constraints, a template being a function that returns a constraint for each k-tuple of activities, each constraint being defined as an object describing a language;
- determining, a set of constraints which are satisfied by all traces in the Petri net's accepted language using a predetermined elation holds;
- removing redundant constraints from the set of satisfied constraints by searching for a minimal set of redundancy-free constraints;
- verifying the event log by checking whether the minimum set of constraints is satisfied by the traces $\sigma$ of the event log.

EP 4 703 990 A1

## Description

### Introduction and Background

The present invention relates to a method of mining behavioral patterns for conformance diagnostics.

*Process mining* [1] is the field of computer science combining traditional process science with data science to analyze *event data.* A core task of process mining is *conformance checking* [5], which consists of comparing desired behavior (i.e., modeled in some process modeling formalism) and observed behavior (i.e., as captured in the event data) to quantify their differences and identify frequent patterns of deviation. In conformance checking, process models may be of a *procedural* or *declarative* nature. Procedural models, e.g., BPMN diagrams [9], describe the exact sequence of steps that are allowed in a process, i.e., a *closed-world assumption.* Declarative models, e.g., DECLARE [24], specify only the constraints upon which a process must operate, i.e., an *open-world assumption.*

Procedural process models are widely available in organizations, e.g., the SAP reference model [13]. Organizations maintain large repositories of procedural models that have been designed for enactment or documentation purposes. Declarative models are used less frequently in practice. While their perceived ease of use is graded positively by practitioners [26], their open-world assumption often yields too flexible or incomplete models.

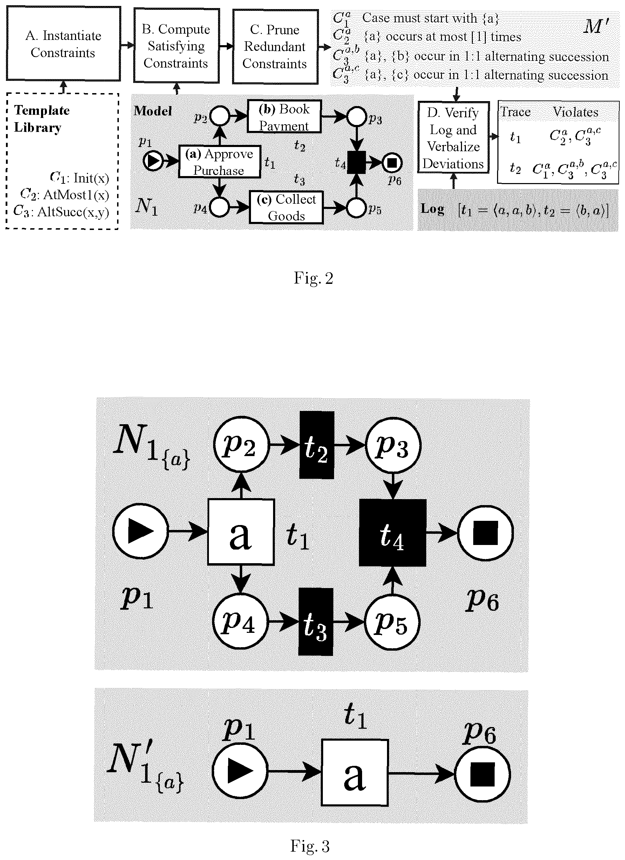

Both modeling formalisms can be used for conformance checking [2,16]. In general, conformance checking artifacts based on procedural models, e.g., *trace alignments,* require a significant cognitive effort from the user to be interpreted . To illustrate that, we consider the purchase process from Figure 2. The process starts with the approval of the purchase (a). After that, the payment must be booked (b) and the goods must be collected (c), which can happen in any order. Only two activity sequences are allowed: $\langle Approve\ Purchase, Book\ Payment, Collect\ Goods \rangle$ and $\langle Approve\ Purchase, Collect\ Goods, Book\ Payment \rangle$, but even for this simple process, state-of-the-art procedural techniques such as trace alignments produce confusing results. To see that, consider optimal alignments from Table 1.

Table 1: Example log with all optimal alignments and violating constraints. An optimal alignment returns the minimal number of activity insertions ( - ) and deletions ( $\dagger$ ) needed to make a trace fit the given model.

| Trace | Optimal Alignments | | | | | Violated Constraints |
|---|---|---|---|---|---|---|
| $t_1 : \langle a, a, b \rangle$ | $a\ \not{a}\ b\ c$ | $a\ \not{a}\ c\ b$ | $a\ c\ \not{a}\ b$ | $\not{a}\ a\ b\ c$ | $\not{a}\ a\ c\ b$ | $C_2^{a}, C_3^{a,c}$ |
| $t_2 : \langle b, a \rangle$ | $a\ b\ \not{a}\ c$ | $a\ b\ c\ \not{a}$ | $a\ c\ b\ \not{a}$ | $\not{b}\ a\ b\ c$ | $\not{b}\ a\ c\ b$ | $C_1^{a}, C_3^{a,b}, C_3^{a,c}$ |

Trace $t_1 = \langle Approve\ Purchase, Approve\ Purchase, Book\ Payment \rangle$, has 2 issues: the purchase is approved twice and the goods are not collected. These are directly captured by constraints $C_2^{a}$ and $C_3^{a,c}$. Techniques such as trace alignments suggest edits to "fix" constraints $C_2^{a}$ and $C_3^{a,c}$. Removing one *Approve Purchase* ( $\not{a}$ ) fixes $C_2^{a}$ and inserting a *Collect Goods* ( $c$ ) fixes $C_3^{a,c}$, but these edits can occur at difference places of the trace, leading to 5 possible optimal alignments.

Similarly, trace $t_2 = \langle Book\ Payment, Approve\ Purchase \rangle$ has two issues: the payment is booked before approval and the goods are not collected. These are indicated by the violated constraints $C_1^{a}, C_3^{a,b}$, and $C_3^{a,c}$. The trace also has five optimal alignments. It can be "fixed" by either moving a to an earlier point $a\ \cdots\ \not{a}$ (fixes $C_1^{a}$ and $C_3^{a,b}$ ) and inserting $c$ (fixes $C_3^{a,c}$ ), as in the first three alignments; or moving $b$ to a later point $\not{b}\ \cdots\ b$ (fixes $C_1^{a}$ and $C_3^{a,b}$ ) and inserting $c$ (fixes $C_3^{a,c}$ ), as in the last two alignments.

In the examples above, multiple edit operations might be related to the fix of a single constraint. Similarly, multiple constraints might be fixed by a single edit operation. Furthermore, the same edit type might mean different things depending on the context, e.g. the deletion for $t_1$ and $t_2$. Consequently, the only way of obtaining insights on the patterns of deviations is by manually inspecting each trace. In summary, the diagnostics provided by trace-alignments are low-level, non-deterministic, and its interpretation depends on context. In contrast, the equivalent declarative model is able to directly explain the deviations in a more understandable form by pointing out the violated business constraints.

In contrast, conformance diagnostics computed for declarative models are more suitable for direct interpretation, yet, suffer from the aforementioned flexibility and incompleteness problems.

The most basic form of conformance diagnostics consists of quantifying behavioral differences between process models and event logs in terms of a single metric [2,15,21,27,28]. Some methods go beyond that to provide insights into the nature of deviations. In [27] and [28], diagnostics are provided as a set of differences in the behavioral profiles of the log and the model. Techniques based on alignments [2] provide diagnostics as a set of moves (insertions or deletions) on a trace, corresponding to undesired or missing behavior. In [21], decomposition techniques are used to detect regions of the model that are non-conforming. Similarly, [15] detects problematic subsets of activities by comparing log and model projections. These techniques offer too low-level feedback, often limited to a set of activities/edits, and do not effectively explain the deviations.

The issue with low-level feedback has been known for long. In [3], the authors of the alignment technique present a method to detect higher-level deviation patterns via high-level alignments. However, this requires users to specify each pattern to be detected.

## Summary of the Invention

Therefore, it is an object of the present invention to provide a method of uncovering patterns of deviation of traces of an event log from a process model, which method alleviates at least partially the aforementoiuned problems.

This object is solved by a method according to the claims.

Thus, the present invention provides a novel conformance checking framework that generates declarative constraints from a procedural input model, which are subsequently used to present conformance diagnostics in a declarative fashion.

In comparison to known approaches described above, the method of the present invention requires no further user input besides the model and the log. Similarly, authors in [20] propose a set of deviation patterns that can be detected on top of a purpose-built multi-layer synchronous product net using trace alignments. The approach incorporates the resource and privacy perspectives and can provide the context in which deviations occurs. Since the technique is still based on alignments, it suffers from some of its limitations such as non-determinism and poor scalability. Furthermore, it is unclear how this approach can be extended to add new patterns.

## Short Description of the Figures

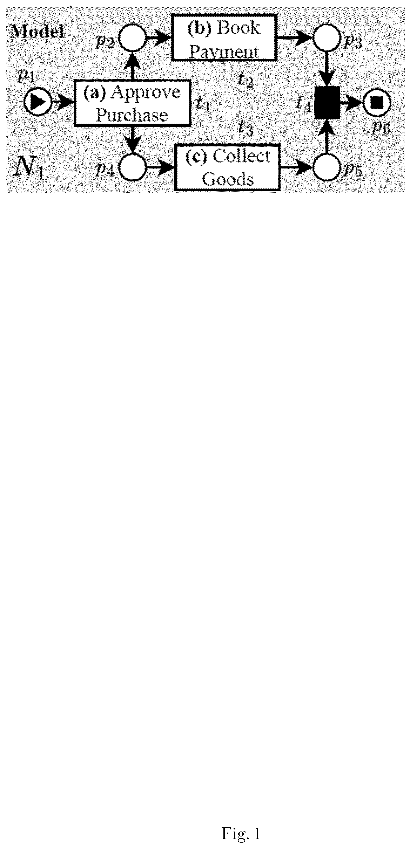

Figure 1 illustrates a model of a purchase process;
Figure 2 illustrates a schematic overview of the framework of the invention;
Figure 3 illustrates projected nets; and
Figure 4 gives an overview over the user interface.

## Detailed Description of the Invention

Figure 2 presents a schematic overview of an embodiment of the present invention. As input, the user provides a *procedural model* and an *event log.* The tool internally maintains a *constraint template library* consisiting of high-level descriptions of constraints, i.e., at the meta-level, to be checked against the reference model. The procedural model is used to compute constraint instances based on the template library (Steps A. and B.). For example, assume that the library contains the template Init(x). If the procedural model specifies that some activity, e.g., activity a, should always be executed first, the constraint Init (a) is instantiated. The result is an "equivalent" declarative version of the originally procedural model. Then, techniques from the field of declarative process mining are used to prune redundant constraints (C) and verify the log to provide diagnostics (D).

Using the discovered constraints to analyze the log ensures that the returned diagnostics are on a higher level, and, thus, more understandable than other automated techniques. Furthermore, the approach presents a series of interesting properties such as *determinism, monotonicity* of the reported deviations, and *flexibility* to add new patterns. The approach is implemented as a standalone tool and evaluated on two real-life datasets, where it is shown to be *scalable* and to generate *nearly complete diagnostics.* Some of the main advantages of the present invention are:
The present invention provides a framework to generate declarative-like conformance diagnostics on top of procedural models. Further, a method is provided for the efficient verification of a subclass of constraint patterns, ensuring the scalability of the approach.

**Preliminaries**

First, basic mathematical notations are defined. Familiarity with automata [11] and Petri net [6] theories is assumed. We use $\mathcal{U}_a$ to denote the universe of activity labels and $\tau \notin \mathcal{U}_a$ to denote the invisible (empty) label. A *trace* is a finite sequence of activities $\sigma \in \mathcal{U}_a^*$. An *event log* is a multi-set of traces $L \in \mathcal{B}(\mathcal{U}_a^*)$ describing the sequences of observed activities and their frequencies. Similarly, a process model M is a set $M \in \mathcal{P}(\mathcal{U}_a^*)$ describing the set of allowed variants. For this work, we consider models defined as Petri nets and note that BPMN diagrams can be converted into Petri nets.

**Definition 1. (Labeled Accepting Petri Net)** *A labeled accepting Petri net is a tuple N = (P, T, F, l, $m_0$, $m_f$) where P is the set of places, T the set of transitions, F $\subseteq$ (P $\times$ T) $\cup$ (T $\times$ P) is the flow relation, l : T $\to$ $\mathcal{U}_a \cup \{\tau\}$ is the labeling function, and $m_0$, $m_f \in \mathcal{B}$ (P) are its initial and final markings. Transitions t for which l(t) = $\tau$ are called invisible transitions.*

The state of a labeled accepting Petri net *N = (P, T, F, l, $m_0$, $m_f$),* called *marking,* is a multiset of places $m \in \mathcal{B}$ (P). It is possible to move from one state into another by firing enabled transitions using the occurrence rule [11]. For a firing sequence $\sigma = \langle t_1, \cdots, t_n \rangle \in T^*$, we write $m[\sigma\rangle m'$ to denote that $\sigma$ is enabled at m $\in \mathcal{B}$ (P) and that firing transitions in $\sigma$ in sequence leads to $m' \in \mathcal{B}$ (P). The *state space* of a Petri net is the set $\mathcal{R}$ (N) = {m'|$\sigma \in T^*$, $m_0[\sigma\rangle m'$} of states reachable by firing any enabled firing sequence and its *accepted language* is the set $\mathcal{L}$ (N) = {l($\sigma$) | $\sigma \in T^*$, $m_0[\sigma\rangle m_f$}, where $l(\sigma) \in \mathcal{U}_a^*$ is the concatenation of the labels of transitions in $\sigma$.

Figure 2 shows a Petri net *N* accepting the language {$\langle a, b, c\rangle$, $\langle a, c, b\rangle$} with |$\mathcal{R}$ (N)| = 6. This work focuses on the class of *regular languages,* which is the class of languages that can be recognized by a *Deterministic Finite Automaton.*

**Definition 2. (Deterministic Finite Automaton (DFA))** *A Deterministic Finite Automaton (DFA) is a 5-tuple D = (Q, Z, $\delta$, $q_0$, $Q_f$) where Q is the set of states, $\Sigma$ is the alphabet, $\delta$ : Q $\times \Sigma \to$ Q is the transition function, $q_0$ is the initial state and $Q_f \subseteq$ Q is the set of final states.*

A minimal *DFA* is a *DFAD = (Q, Z, $\delta$, $q_0$, $Q_f$)* such that there does not exist any other $DFAD' = (Q', \Sigma, \delta', q_0', Q_f')$ such that $\mathcal{L}$ (D) = $\mathcal{L}$ (D') and |Q| > |Q'|.

That is, there does not exist another DFA with less states accepting the same language. "Minimal" here means "minimal number of states Q".

A trace $\sigma = \langle a_1, \cdots, a_n \rangle \in \mathcal{U}_a^*$ is accepted by a DFA *D = (Q, $\Sigma$, $\delta$, $q_0$, $Q_f$)* if there exists a sequence of states $\langle s_0, \cdots, s_n \rangle$ s.t. $s_0 = q_0$, $\forall_{1 \le i \le n} q_i = \delta(q_{i-1}, a_i)$ and $s_n \in F$. We call the set $\mathcal{L}(D) = \{\sigma \in \mathcal{U}_a^* \mid \sigma$ is accepted by D} its language. In general, for a

Petri net *N,* if |$\mathcal{R}$ (N)| < oc, i.e., its state space is finite, then $\mathcal{L}$ (N) can be expressed by a DFA called its *behavioral automaton.*

**Definition 3. (Behavioral Automaton)** *The behavioral automaton of a bounded labeled accepting Petri net N = (P, T, F, l, $m_0$, $m_f$) is the unique (up to state renaming) minimal DFA $B_N$ = (Q, Z, $\delta$, $q_0$, $Q_f$) such that $\mathcal{L}$ (N) = $\mathcal{L}$ ($B_N$).*

**Mining Behavioral Patterns**

This section details the framework steps from Figure 2. For the remainder, we consider $\mathcal{U}_a$ = {a, b, c} and the event log $L_1$ = [$\langle a, a, b\rangle$, $\langle b, a\rangle$]. We first formalize the concepts of *constraints, constraint templates* and *constraint template*

*library:*

**Definition 4. (Constraint)** *A constraint c is an object describing a language* $\mathcal{L}(c) \subseteq \mathcal{U}_a^*$ *. A trace* $\sigma \in \mathcal{U}_a^*$

*satisfies c if* $\sigma \in \mathcal{L}$ *(c). We denote the universe of all constraints as* $\mathcal{U}_C$ *.*

A core idea of the present invention is centered around the automatic instantiation of constraints from a set of constraint templates (called a template library).

**Definition 5. (Constraint Template)** *A constraint template is a function C :* $\mathcal{U}_a^k \rightarrow \mathcal{U}_C$ *returning a constraint*

*for each k-tuple of activities* $(a_1, \cdots, a_k) \in \mathcal{U}_a^k$ *, where k is the number of template parameters. We write C$^{a_1, \cdots, a_k}$ = C* $(a_1, \cdots, a_k)$.

**Definition 6. (Constraint Template Library)** *Let C be the universe of constraint templates. A template library*

$\mathbb{L}$ *, is a set of templates* $\mathbb{L} \subseteq \mathcal{C}$ *.*

The present invention focuses on models expressed as bounded Petri nets, i.e., Petri nets with finite state spaces, and constraints expressing regular languages. The DECLARE [24] language is an example of a set of constraints that can be expressed using regular expressions. Table 2 shows an example constraint template library containing three

constraint templates $\mathbb{L}_1 = \{C_1, C_2, C_3\}$ expressed as regular expressions. It is to be noted that in practice, more extensive libraries are used. *x, y* denote the constraint parameters in the templates, and *k* denotes the number of template parameters. Replacing the template parameters *x, y* with concrete activities yields a constraint. For example, $C_3(a,b)$

returns $C_3^{a,b} \in \mathcal{U}_C$ describing all traces where *a* and *b* occur in one-to-one succession. Furthermore, each constraint is associated to a verbalization that describes it in human-understandable way.

The term Lexicographic Order is used as follows:

Given a set of totally ordered elements E (i.e. each two elements in E can be compared). Given two(m + 1)-sized sequences of elements in $s_1, s_2$ in E. Then, $s_1 < s_2$ in lexicographical order if and only if there exists an index i such that $1 \leq i$ <= m + 1 such that $s_1[i] < s_2[i]$ and $s_1[j] = s_2[j]$ for all $j < i$. That is, there exists an index i such that all both sequences are equal up to index *i* - 1 and the *i*-th entry of $s_1$ is smaller (according to the total order) than the i-th entry of $s_2$.

In the present invention: *E* is the set set of constraints. The total order is the user-provided constraint ordering order. The sequences $s_1$ and $s_2$ are the permutations of (*m* + 1) constraints.

Permutations of constraints are ordered such that permutations with smaller constraints come first.

**Step A: Instantiating Constraints**

The first step of the framework (A) is to instantiate candidate constraints from the template library following an *instantiation strategy.* The most straightforward instantiation strategy is the brute force instantiation of all templates using all parameter combinations, but notice that more sophisticated instantiation strategies are also possible. For $\mathcal{U}_a$ = {a, b, c}

and $\mathbb{L}_1 = \{C_1, C_2, C_3\}$ , the brute force instantiation yields the set of constraints $Inst = \{C_1^a, \cdots, C_1^c, C_2^a, \cdots, C_2^c, C_3^{a,b}, \cdots, C_3^{c,b}\}$.

Table 2: Example constraint template library $\mathbb{L}_1 = \{C_1, C_2, C_3\}$ with templates expressed as regular expressions. *x, y* denote the constraint parameters and *k* the number of template parameters.

| Template | k | Verbalization | RegEx |
|---|---|---|---|
| $C_1$ Init($x$) | 1 | The case must start with {$x$} | x. * |
| $C_2$ AtMost1($x$) | 1 | {$x$} occurs at most [1] times | (!x)*x(!x)* |
| C$_3$ AltSucc($x, y$) | 2 | {$x$}, {$y$} occur in 1:1 alternating succession | (!(x\|y)\|(x(!(x\|y))*y))* |

**Step B: Computing Satisfied Constraints**

From the set of instantiated constraints in the previous step, we are interested in the constraints that are *satisfied* by the model. A constraint is satisfied by a process model, if and only if the constraint holds for all traces in the model's accepted language. For the Petri net of Figure 2 and the instantiated set *Inst,* the set of satisfied constraints is

$$Sat = \{C_1^a, C_2^a, C_2^b, C_2^c, C_3^{a,b}, C_3^{a,c}\}$$

.

**Definition 7. *(Satisfying Constraint)*** Let $c \in \mathcal{U}_C$ be a constraint and let M be a process model. c is said to be satisfied by $M \Leftrightarrow \mathcal{L}(M) \subseteq \mathcal{L}(c)$.

For a bounded Petri net N with behavioral automaton $B_N$ and constraint c expressed as a regular expression with associated minimal DFA $B_c$ it holds that $\mathcal{L}(N) \subseteq \mathcal{L}(c) \Leftrightarrow \mathcal{L}(B_N) \subseteq \mathcal{L}(B_c)$. Checking this condition is in $\mathcal{O}(|B_{SN}| * |B_c| * |\mathcal{U}_a|)$ [11]. Therefore, one can check if a constraint is satisfied by a model as long as the model and the constraint's corresponding DFAs can be obtained.

**Scalable Conformance Diagnostics with $\Gamma$-invariant Constraints**

As discussed in the previous section, it is possible to check if a constraint is satisfied by computing the Petri net's behavioral automaton. This becomes expensive for large Petri nets due to the state explosion problem. In this section, we introduce a class of constraints for which constraint checking is significantly accelerated. The method consists of reducing the Petri net's state space by pruning irrelevant activities. We start with the definition of $\Gamma$-invariance for a constraint's language, which intuitively means that modifying a trace by inserting or removing activities in $\Gamma$ does not influence language inclusion.

**Definition 8. *($\Gamma$-Invariance)*** Let $c \in \mathcal{U}_C$ and let $\Gamma \subseteq \mathcal{U}_a$. c is $\Gamma$-invariant if for any

$$\sigma, \hat{\sigma} \in \mathcal{U}_a^* \ s.t. \ \sigma\big|_{\mathcal{U}_a \setminus \Gamma} = \hat{\sigma}\big|_{\mathcal{U}_a \setminus \Gamma}$$

, it holds that $\sigma \in \mathcal{L}(c) \Leftrightarrow \hat{\sigma} \in \mathcal{L}(c)$.

$\Gamma$-invariance is closely related to the notion of stutter-invariance and next-free formulas in model checking [23]. In DECLARE, $\Gamma$-invariant constraints are essentially constraints that do not express a directly-follows relation.

In our running example, constraint $C_2^{'a}$ is {b, c}-invariant, i.e., inserting or removing activities b and c to a trace does not change whether $C_2^{'a}$ holds for that trace. Meanwhile, $C_1^{'a}$ is not $\Gamma$-invariant for any $\Gamma \subseteq \mathcal{U}_a$. Lemma 1 below shows that one can compute the maximal set $\Gamma$ for which a constraint c is $\Gamma$-invariant by looking into the self-loops of c's corresponding minimal DFA.

**Lemma 1. *($\Gamma$-Invariance and Self Loops)*** Let $c \in \mathcal{U}_C$ be a constraint and let $D_c = (Q, \mathcal{U}_a, \delta, q_0, Q_f)$ be the unique minimal DFA such that $\mathcal{L}(c) = \mathcal{L}(D)$. c is $\Gamma$-invariant $\Leftrightarrow \forall_q \in Q, \gamma \in \Gamma : \delta(q, \gamma) = q$.

*Proof.* The $\Leftarrow$ direction is straightforward to see. We prove the $\Rightarrow$ direction by contradiction. Assuming that c is $\Gamma$-invariant but $\exists q, q' \in Q, \gamma \in \Gamma, q \neq q'$ s.t. $\delta(q, \gamma) = q'$. Let $x \in \mathcal{U}_a^*$ be a prefix leading to state q. Then $x\gamma$ leads to state q'. From the minimality of $D_c$, it follows that q and q' correspond to different equivalence classes of the Nerode equivalence. Therefore, there exists a suffix $z \in \mathcal{U}_a^*$ such that either $xz \in \mathcal{L}(D_c)$ and $x\gamma z \notin \mathcal{L}(D_c)$ or $xz \notin \mathcal{L}(D_c)$ and $x\gamma z \in \mathcal{L}(D_c)$. But this contradicts $\Gamma$-invariance.

**Definition 9. *(Projecting Petri nets)*** Let N = (P, T, F, l, m_0, m_f) be a labeled accepting Petri net and $A \subseteq \mathcal{U}_a$ a set of activities. The projection of N into A is the

$$net \ N_A = (P, T, F, l_A, m_0, m_f) \ with \ l_A(t) = \begin{cases} l(t) \ if \ l(t) \in A \\ \\ \tau \ otherwise \end{cases}$$

It holds that $\mathcal{L}\,(N_A) = \{\sigma\|_A \mid \sigma \in \mathcal{L}\,(N)\}$. i.e., the accepted language of the projected Petri net is the projection of the language of the original net in A. Furthermore, oftentimes $B_{NA} << B_N$. We can use this fact to speed up the validity check of $\Gamma$-invariant constraints using the lemma below.

**Lemma 2. *(Validity Check for $\Gamma$-invariant Constraints)*** *Let $c \in \mathcal{U}_C$ be $\Gamma$-invariant and $N$ a Petri net. Then $\mathcal{L}$*

*$(N) \subseteq \mathcal{L}\,(c) \Leftrightarrow \mathcal{L}\,(N_{\mathcal{U}_a \setminus \Gamma} \subseteq \mathcal{L}\,(c)$*

*Proof.* $\Rightarrow$ follows from $\mathcal{L}\,(N_{\mathcal{U}_a \setminus \Gamma} \subseteq \mathcal{L}\,(N)$. $\Leftarrow$ follows from $\Gamma$-invariance of c.

Lemma 2 means that we can check if a $\Gamma$-invariant constraint c is satisfied by a Petri net $N$ by checking if it is satisfied by $N_{\mathcal{U}_a \setminus \Gamma}$. For the template library of Table 2, constraint $C_2^a$ is {b, c}-invariant. By projecting Petri net $N_1$ from Figure 2 into {a}, we obtain the Petri net $N_{1_{\{a\}}}$ from Figure 3. By applying language preserving reduction rules [22], we obtain the reduced net $N'_{1_{\{a\}}}$. $C_2^a$ is satisfied by $N'_{1_{\{a\}}}$. Therefore, it follows from Lemma 2 that it is also satisfied by $N_1$. Notice that $|\mathcal{R}\,(N_1)| = 6$, while $|\mathcal{R}(N'_{1_{\{a\}}})| = 2$. This reduction in the state space size can lead to dramatic speedups as will be shown in Section 6.

**Step C: Pruning Redundant Constraints**

The result of the previous step is the set of satisfied constraints for the given model. However, some constraints are redundant. For the satisfied constraints *Sat,* $C_2^a$ ({a} occurs at most [1] times) and $C_3^{a,b}$ ({a}, {b} occur in 1:1 alternating succession) imply $C_2^b$ ({b} occurs at most [1] times). Redundant constraints produce redundant diagnostics. Therefore, we add a redundancy resolution step.

**Definition 10. *(Redundant Constraints)*** *Let $C \subseteq \mathcal{U}_C$. A constraint c is redundant in C if $\exists\, C' \subseteq C \setminus \{c\}$ s.t.*

$$\left(\bigcap_{c'_i \in C'} \mathcal{L}(c'_i)\right) \subseteq \mathcal{L}(c)$$

*. We write $C' \to$ c.*

We are interested in a minimal set of redundancy-free constraints (in our running example,

$$M' = \{C_1^a, C_2^a, C_3^{a,b}, C_3^{a,c}\}$$

is such a set). Formally, for $C \subseteq \mathcal{U}_C$, we want

---

**Algorithm 1:** An approximate model minimization algorithm.

**1 input** A set of constraints $C$, a total ordering criterion $<_c$, a maximum intersection size $m$
**2 output** A set of constraints $C' \subseteq C$ s.t. $C' \Rightarrow C$
**3** $C' \leftarrow C$;
**4 foreach** $(c_1, c_2, \cdots, c_m, c_{m+1}) \in C^{m+1}$ s.t. $c_i <_c c_j\ \forall 1 \leq i < j \leq m+1$ **do**
**5** $\quad$ **if** $\{c_1, \cdots, c_m\} \to c_{m+1}$ **then** $C' \leftarrow C' \setminus \{c_{m+1}\}$ ;
**6 return** $C'$

---

to solve the optimization $min_{C' \subseteq C}|C'|$ s.t. $\forall c \in C, C' \to c$. In the declarative process mining literature, there exist approaches to prune redundant constraints [?]. However, existing techniques require the intersection of all constraints' DFAs, which is in $\mathcal{O}\,(\Pi_{c \in C}\,|B_c|)$.

Instead, to ensure the scalability of the pipeline, we use an approximated approach specified in algorithm 1. The algorithm tries to remove as many constraints as possible. The approach orders all constraints according to a predefined order [7] (the order is specific to the template library and hence configured by the tool provider/vendor) and checks all combinations $(c_1, c_2, \cdots, c_m, c_{m+1}) \in C^{m+1}$ s.t. $c_i <_c c_j$ for all $1 \leq i < j \leq m + 1$. If $c_{m+1}$ is found to be redundant, it is removed. The algorithm's correctness follows directly from the fact that we use a total ordering criterion, which ensures that we do not introduce cycles of constraint implications. Furthermore, its complexity is in $\mathcal{O}\,((\max_{\{c \in C\}} |B_c|^{m+1}) * |C|^{m+1})$, i.e. a polynomial with exponent m in the maximum constraint DFA size and the number of constraints.

In our running example, the set of redundancy free constraints is $M' = \{C_1^a, C_2^a, C_3^{a,b}, C_3^{a,c}\}$, which is the same as the set of constraints from Figure 2.

### Step D: Verifying the Log and Verbalizing Deviations

The previous step C produces a set of redundancy-free constraints that must be satisfied by all traces in the model. If a trace violates a constraint, the trace is also deviant. Hence, we can use the discovered constraints as a way to provide higher-level diagnostics to the user, and use the constraint's associated verbalization to explain

the trace's deviation. For that, standard constraint monitoring techniques can be leveraged such as replay-based or alignment-based [16]. As shown in Section 1, using the set of discovered constraints results in more understandable diagnostics.

### Runtime and Properties

If a trace violates a constraint c, then it must also violate the model (since $\mathcal{L}\,(M) \subseteq \mathcal{L}\,(c)$). Therefore, the approach produces only "correct" diagnostics. Also, given the same template library, the computed set of satisfied constraints is always the same and only depends on $\mathcal{L}\,(M)$. Therefore, the approach is deterministic. Moreover, given models $M_1$ and $M_2$, with satisfied constraints $Sat_{M_1}$ and $Sat_{M_2}$, it holds that $\mathcal{L}\,(M_1) \subseteq \mathcal{L}\,(M_2) \Rightarrow Sat_{M_2} \subseteq Sat_{M_1}$, i.e., *monotonicity* holds for the provided set of diagnostics. This last property ensures that the diagnostics are consistent as the user edits the model. Adding/removing behavior to a model can only prune/extend the set of reported violations. These properties do not hold after the pruning step. However, this is not harmful as the set of satisfied constraints can be logically inferred from the set of minimal constraints.

The method instantiates $\mathcal{O}\,(|\,\mathcal{U}_a\,|^k)$ constraints. The validity check depends on the size of the model's behavioral automaton, which is worst-case exponential. However, for $\Gamma$-invariant constraints the state-space can be reduced to make it manageable in practice. The pruning step performs $\mathcal{O}\,(|\,\mathcal{U}_a\,|^{mk+k})$ DFA operations. By limiting the maximum size of a constraint's DFA, we can ensure a constant time for this operation, therefore the pruning step can be made $\mathcal{O}\,(|\,\mathcal{U}_a\,|^{mk+k})$ too. Last, checking the constraints takes $\mathcal{O}\,(|E| * |\,\mathcal{U}_a\,|^k)$ where $|E|$ is the number of events in the log. At first the exponents look too high, but as shown by the experiments in Section 6 they are tractable in practice.

### Implementation and Qualitative Evaluation

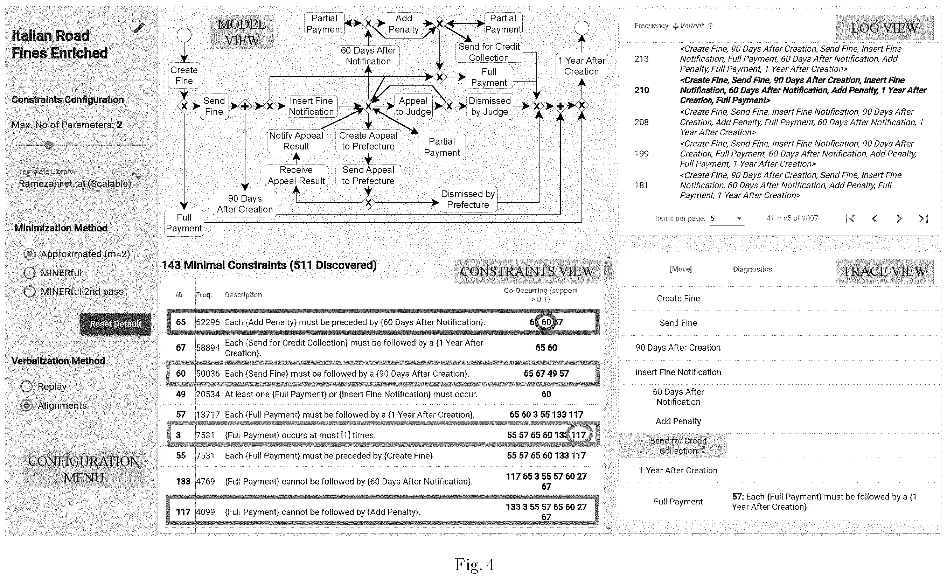

The framework of the present invention is implemented as a web app using the PM4Py [?] and automata-lib [?] libraries for the backend (both written in pure Python). Figure 4 shows an overview of its UI. On the sidebar, the user can set the framework's parameters. The tool displays the model, the set of discovered constraints, and the log. Furthermore, it has a trace explorer that allows the user to drill down on single traces of the log. As a template library, we implement the set of control-flow behavioral patterns presented in [25], which includes all DECLARE [24] templates as well as templates with more than two parameters. For the minimization step, we adapt the DECLARE constraint ordering criteria proposed in [7] to this library.

We demonstrate how the framework can be used to gain insights into the well-known Italian Road Fines [17] process. We extract the normative description provided in [19]. The process starts with the creation of a fine. In at most 90 days, the fine is sent to the offender's address. The date on which the offender is notified is inserted into the system. From the moment of notification, the offender has 60 days to appeal to the judge or the prefecture, which might dismiss the case. After these 60-days, no further appeal is possible and the offender must pay the fine. If the payment takes too long, a penalty is added to the total amount. Payments are possible at any moment and the case can also terminate at any point if the owned amount is fully paid. Otherwise, if it takes too long, the process also terminates with the case being sent for credit collection. The entire case must be completed within a year of the fine creation.

The original model from [19] is designed as a data Petri net. Since our approach can only handle control flow, we enrich the original event log with events to capture temporal marks (90 Days After Creation, 1 Year After Creation, and 60 Days After Notification) and data attributes such as dismissal type (Dismissed by Judge and Dismissed by Prefecture) and payment status (Partial Payment and Full Payment). A reference BPMN model is drawn from the process description (model view in Figure 4). For the alignment cost function, we assign very high costs to the removal and addition of temporal marks. Since these are not proper process steps, we do not want to allow them to be edited. The data is loaded into the implemented tool.

We consider a max parameter of two, and the proposed "approximated" constraint minimization method according to step C.

The most frequently violated constraint is **65:** *Each {Add Penalty} must be preceded by (60 Days After Notification),* occurring in 40% of the cases. The constraint description suggests that penalties are being added too early. To drill down on that, the tool provides a set of frequently co-occurring constraints that positively correlate (i.e., lift >1) with this violation. Among them, constraint **60**:*Each {Send fine} must be followed by a {90 Days After Creation}* suggests a causal relation. If fines are sent too late, then the penalty is also added earlier than it should. This is plausible since the time to add a penalty is computed considering the time elapsed since the fine creation. So a delay in sending the fine also causes the penalty to be added too early. This suggests that sending the fines more speedily will also improve other areas of conformance.

Another interesting violation refers to constraint **3:** *{Full Payment} occurs at most [1] times.* The enriched log distinguishes between Partial and Full payments, so repeated full payments can only occur in situations where the outstanding amount is fully paid, but further payments are still effectuated. This only happens for 5% of the cases but is arguably a serious problem. To understand its root cause, we again look into the constraints that co-occur with it and see that constraint **117**:*{Full Payment} cannot be followed by {Add Penalty}* has a strong correlation with it (lift > 10). Constraints 3 and 117 are violated in only 5% and 2.5% of the cases, but constraint 117 is violated with a 50% chance if 3 is also violated. This suggests that double payments mostly happen to pay the added penalty. A possible root cause for that are communication delays between the agents adding the penalty and processing the payment.

Overall, this analysis shows how the high-level diagnostics combined with understandable constraint descriptions help the analyst to make sense of deviations and formulate potential root causes and improvement areas. In principle, similar insights could be obtained by following the methodology proposed in [25]. However,

Table 3: Snippet of diagnostics produced by [12] (simplified to fit the table) for the enriched road fines dataset. In total, 703 statements are produced.

| ID | Statement |
|---|---|
| **S1** | {Creation + 60 Days } occurs after {Add Penalty} and before {Creation + 1 Year} |
| **S2** | After {Partial Payment}, {Full *Payment*} is repeated |
| **S3** | After {Send Fine}, {Full Payment} is repeated |
| **S4** | {Add Penalty} occurs after {Full Payment} and before {Creation + 60 Days } |

the analyst would need to guess and manually configure each pattern of interest. By mining the constraints from the process model, our approach saves the analyst significant time. To the best of our knowledge, [12] is the only existing work that generates natural-language diagnostics from procedural models. The approach works by matching a series of hard-coded patterns in the synchronized error-correcting product of the event log and process model.

Table 3 shows a snippet of the behavioral statements produced by [12]. While our approach produces 143 constraints (out of which only 76 are violated), [12] produces 703 distinct behavioral statements. The log contains 995 violating variants, i.e. there is almost one unique statement for every violating variant. The high number of distinct statements make it difficult for users to understand common deviation patterns. Many statements are slight variations of each other, e.g. statements **S2** and **S3** only differ in their "reference point". The tool from [12] does not provide the frequency of each violation and does correlate violations, making it difficult to drill down through them. Among the returned set of behavioral statements, **S1** is equivalent to constraint **65** reported by our tool (unfortunately, we could not find an equivalent statement to constraint **60**). Similarly, constraints **3** and **117** are (indirectly) reflected by statements **S2/S3** and **S4**.

In summary, the method described in [12] requires more extensive drill-down efforts (due to the higher number of violations) to obtain similar insights. Furthermore, our approach differs from [12] in three key ways: First, we offer a flexible method for defining new patterns; second, we can explain deviations caused by long-term dependencies, e.g. via the "AlternatingSuccession" template; last, we provide better runtime guarantees. A merit of [12] is to identify precision issues, i.e. behaviors allowed by the model but absent in the log. This could be achieved in our framework by "swapping" the roles of the log and the model.

**Quantitative Evaluation**

This section evaluates the approach for its scalability and completeness. We compare two scenarios: considering all constraints (ALL) and considering only $\Gamma$-invariant constraints ($\Gamma$). For each scenario, we vary the maximum number of template parameters $max_k$ from 2 to 4. The framework is evaluated on two real-world datasets : The enriched italian road fines dataset (RF) described in Section 6 and the BPI Challenge 2015 event log [10] (BPI-15) with a model discovered with the Inductive Miner-infrequent variant [14] with a noise threshold of 0.9. We filter the BPI-15 log for the municipality 1, subprocess 8, and remove repeated activities. This is needed as otherwise the used process discovery method would only return flower constructs. The models are of small to middle size. Both contain 20 transitions, and 21 resp. 561 states in their behavioral automata. The experiments are run single-threaded on a Ubuntu 22.04 notebook with an Intel Xeon E-2276M processor and 32Gigabytes of main memory .

**Scalability and Pruning Efficiency**

This experiment evaluates the scalability of the approach and the effectiveness of the pruning step. The results are summarized in Table 4. For both datasets, increasing the maximum number of template parameters $max_k$ from 3 to 4 leads to a significant increase in the number of instantiated constraints (#inst), which causes a significant increase in the total runtime for the satisfiability check ($t_{sat}$). Nevertheless, increasing $max_k$ only slightly increases the number of satisfied constraints. For the road fines dataset, the average time to check if a constraint is satisfied (= $t_{sat}$/#inst) is approximately the same for both scenarios (ALL and $\Gamma$). For the BPI-15 dataset, the check of each constraint takes significantly longer for the ALL than for the $\Gamma$ sce-

Table 4: Evaluation of constraint check and minimization steps measuring the number of instantiated constraints (#inst), and the number of satisfied/minimal constraints (#sat/#min) and the time in seconds to compute them ($t_{sat}/t_{min}$).

| DS | $max_k$ | ALL Templates | | | | | $\Gamma$-Invariant Templates | | | | |
|---|---|---|---|---|---|---|---|---|---|---|---|
| | | #inst | $t_{sat}(s)$ | #sat | $t_{min}(s)$ | #min | #inst | $t_{sat}(s)$ | #sat | $t_{min}(s)$ | #min |
| RF | 2 | 8531 | 2.58 | 1295 | 11.8 | 227 | 3386 | 0.75 | 511 | 7.9 | 143 |
| | 3 | 50075 | 17.0 | 19653 | 87.7 | 223 | 13772 | 3.74 | 1244 | 13.2 | 145 |
| | 4 | 683315 | 285 | 336991 | 1699 | 454 | 140420 | 46.4 | 21927 | 830 | 468 |
| BPI-15 | 2 | 9442 | 16.8 | 444 | 6.02 | 242 | 3763 | 0.75 | 148 | 1.31 | 109 |
| | 3 | 49042 | 71.3 | 11147 | 83.4 | 1112 | 13663 | 3.45 | 170 | 1.38 | 109 |
| | 4 | 555922 | 1328 | 221355 | 3281 | 1953 | 115039 | 35.7 | 9632 | 1075 | 555 |

nario. This is explained by its larger state space, for which the inventive techniques using the $\Gamma$-invariants for validity checks described in step B above pay off.

In all experiment setups, the constraint minimization step takes a significant portion of the total time, with up to an hour for BPI-15 when $max_k = 4$. For comparison, the method proposed in [7] goes out of memory for certain scenarios. Still, the approximated minimization step is very effective at pruning redundant constraints, pruning 99.999% of the satisfied constraints for the road fines dataset in the ALL scenario with $max_k = 4$. Finally, when considering the absolute runtime numbers, all experimental setups could be computed within two hours, with the majority of them being computed within a minute. Last, notice that the approach is implemented in pure Python. A more careful implementation in a compiled language is expected to bring at least an order of magnitude of improvement, making the approach applicable for interactive scenarios.

**Completeness and Redundancy**

We measure the completeness of the produced diagnostics, i.e., the share of deviations that can be explained, and the amount of redundancy of the returned diagnostics. For each scenario, we align the event log and the process model and pinpoint constraints to model/log moves using the method presented in [16]. constraints associated with a move *explain* the move, i.e., the constraints justify the insertion/deletion at the given position. Table 5 summarizes the results.

Table 5: Completeness and redundancy results. *dev* and *mov* are the numbers of deviant variants and non-synchronous moves. We report the number of traces violating at least one constraint (*det*), the number of moves explained by at least one constraint (*expl*), and the average number of constraints per move (*avg*)

| DS | | dev | det | | | mov | expl | | | avg | | |
|---|---|---|---|---|---|---|---|---|---|---|---|---|
| | | | k=2 | k=3 | k=4 | | k=2 | k=3 | k=4 | k=2 | k=3 | k=4 |
| RF | ALL | 995 | 994 | 995 | 995 | 4489 | 4448 | 4489 | 4489 | 3.79 | 4.34 | 9.47 |
| | $\Gamma$ | | 992 | 995 | 995 | | 3914 | 4238 | 4238 | 3.49 | 3.88 | 8.76 |
| RF | $\Gamma+$ | 992 | 995 | 995 | 995 | 4489 | 3914 | 4238 | 4489 | 3.42 | 3.97 | 8.14 |
| BPI-15 | ALL | 70 | 70 | 70 | 70 | 110 | 108 | 108 | 108 | 2.34 | 2.17 | 2.46 |
| | $\Gamma$ | | 70 | 70 | 70 | | 108 | 108 | 108 | 2.17 | 7.30 | 5.86 |

On the trace level, most non-conforming traces violate at least one discovered constraint. On the alignment move level, the discovered constraints explain most of the moves, with the road fines dataset performing the worst with 13% of its moves unexplained for the $\Gamma$ scenario with $k = 2$. The experiment also shows that by using ALL constraints or increasing the maximum number of template parameters, more moves can be explained.

Finally, Table 5 also shows the average number of constraints explaining each alignment move. The method must report as few constraints per move as possible, to not overwhelm the user. For the BPI-15 dataset, in all but two scenarios, the average number of constraints per alignment move is below three. Furthermore, we observe only a slight variation in the number of constraints per move when varying $max_k$. In contrast, for the road fines dataset, all but one scenario report over three constraints per move, with a peak of 9 constraints per move for the ALL scenario with $max_k = 4$.

In summary, the experiments show the scalability of the method, with $\Gamma$-invariant constraints being particularly efficient for models with large state spaces. This increased efficiency of $\Gamma$-invariant constraints comes at the cost of a slight decrease in completeness. By increasing the maximum number of constraint parameters, more deviations can be explained, but this comes at the expense of an increase in the

total runtime. This exposes the tradeoff between scalability, completeness, and redundancy, which the user can select.

**Enriching the Template Library** As shown in the section above, the discovered constraints provide nearly complete diagnostics. Still, some violations cannot be explained by any constraint. One example is the alignment displayed in Figure 4. No constraint explains the insertion of the activity "Send for Credit Collection". However, the template library can be easily extended to become more complete.

By analyzing the model, one notices that the insertion happens because at least one of the activities "Full Payment", "Send for Credit Collection", "Dismissed by Judge" or "Dismissed by Prefecture" must occur. By adding the constraint template $.*(\alpha_1|\alpha_2|\alpha_3|\alpha_4).*$ to the library, meaning *"either $\alpha_1$, $\alpha_2$, $\alpha_3$, or $\alpha_4$ must happen in the case",* all moves are explained (see $\Gamma +$ in Table 5). Of course, this does not mean that the library is complete, but shows that it can be easily extended to capture new patterns.

**Conclusion**

A method to generate understandable conformance diagnostics based on behavioral patterns has been presented. The method automatically instantiates the constraints from the template library, checks for satisfying constraints, and prunes redundant constraints. It presents a series of interesting properties such as returning higher level diagnostics, absence of false positives, and monotonicity of the reported diagnostics. The qualitative evaluation demonstrates how it can be applied to analyze an event log, uncovering drill-down directions. The quantitative evaluation shows that it can cover most of the deviations in real-world logs in a feasible runtime. The user can control the scalability of the method by restricting the set of deviation patterns and varying the maximum number of template parameters at the expense of slightly less complete diagnostics.

**References**

1. van der Aalst, W.: Data Science in Action, pp. 3-23. Springer Berlin Heidelberg, Berlin, Heidelberg (2016)
2. Adriansyah, A., van Dongen, B., van der Aalst, W.: Conformance checking using cost-based fitness analysis. In: 2011 IEEE 15th International Enterprise Distributed Object Computing Conference. pp. 55-64 (2011)
3. Adriansyah, A., Van Dongen, B.F., Zannone, N.: Controlling break-the-glass through alignment. In: 2013 International Conference on Social Computing. pp. 606-611. IEEE (2013)

4. Alman, A., Di Ciccio, C., Haas, D., Maggi, F.M., Nolte, A.: Rule mining with rum. In: 2nd International Conference on Process Mining (ICPM). pp. 121-128. IEEE (2020)

5. Carmona, J., van Dongen, B.F., Solti, A., Weidlich, M.: Conformance Checking - Relating Processes and Models. Springer (2018)

6. Desel, J., Esparza, J.: Free choice Petri nets. No. 40, Cambridge university press (1995)

7. Di Ciccio, C., Maggi, F.M., Montali, M., Mendling, J.: Resolving inconsistencies and redundancies in declarative process models. Inf. Sys. 64, 425-446 (2017)

8. Di Ciccio, C., Maggi, F.M., Montali, M., Mendling, J.: On the relevance of a business constraint to an event log. Information Systems 78, 144-161 (2018)

9. Dijkman, R.M., Dumas, M., Ouyang, C.: Semantics and analysis of business process models in BPMN. Inf. Softw. Technol. 50(12), 1281-1294 (2008)

10. van Dongen, B.: BPI challenge 2015 (2015), data.4tu.nl/collections/{_}/5065424/1

11. Esparza, J., Blondin, M.: Automata theory: An algorithmic approach. MIT Press (2023)

12. García-Banuelos, L., van Beest, N.R., Dumas, M., Rosa, M.L., Mertens, W.: Complete and inter-pretable conformance checking of business processes. IEEE Transactions on Software Engineering 44(3), 262-290 (2018)

13. Keller, G., Teufel, T.: SAP R/3 Process-oriented Implementation: Iterative Process Prototyping. SAP databases, Addison Wesley Longman (1998)

14. Leemans, S.J.J., Fahland, D., van der Aalst, W.M.P.: Discovering block-structured process models from event logs containing infrequent behaviour. In: Business Process Management Workshops, pp. 66-78. Springer (2014)

15. Leemans, S.J.J., Fahland, D., van der Aalst, W.M.P.: Scalable process discovery and conformance checking. Software and Systems Modeling 17, 599 - 631 (2016)

16. de Leoni, M., Maggi, F., van der Aalst, W.: Aligning event logs and declarative process models for conformance checking, pp. 82-97 (01 2012)

17. de Leoni, M., Mannhardt, F.: Road traffic fine management process (2 2015)

18. Maggi, F.M., Bose, R.P.J.C., van der Aalst, W.M.P.: Efficient discovery of understandable declarative process models from event logs. In: Advanced Information Systems Engineering, pp. 270-285. Springer, Berlin, Heidelberg (2012)

19. Mannhardt, F., De Leoni, M., Reijers, H.A., Van Der Aalst, W.M.: Balanced multi-perspective checking of process conformance. Computing 98, 407-437 (2016)

20. Mozafari Mehr, A.S., M. de Carvalho, R., van Dongen, B.: Explainable conformance checking: Understanding patterns of anomalous behavior. Engineering Applications of Artificial Intelligence 126, 106827 (2023)

21. Munoz-Gama, J., Carmona, J., van der Aalst, W.: Single-entry single-exit decomposed conformance checking. Information Systems 46, 102-122 (2014)

22. Murata, T.: Petri nets: Properties, analysis and applications. Proceedings of the IEEE 77(4), 541-580 (1989)

23. Peled, D., Wilke, T.: Stutter-invariant temporal properties are expressible without the next-time operator. Information Processing Letters 63(5), 243-246 (1997)

24. Pesic, M., Schonenberg, H., van der Aalst, W.M.P.: Declare: Full support for loosely-structured processes. In: 11th IEEE International Enterprise Distributed Object Computing Conference (EDOC 2007). pp. 287-287 (2007)

25. Ramezani, E., Fahland, D., van der Aalst, W.M.: Diagnostic information in compliance checking. Tech. rep., Citeseer (2012)

26. Reijers, H.A., Slaats, T., Stahl, C.: Declarative modeling-an academic dream or the future for bpm? In: Business Process Management - 11th International Conference, BPM. Lecture Notes in Computer Science, vol. 8094, pp. 307-322. Springer (2013)

27. Rozinat, A., van der Aalst, W.: Conformance checking of processes based on monitoring real behavior. Information Systems 33(1), 64-95 (2008)

28. Weidlich, M., Polyvyanyy, A., Desai, N., Mendling, J., Weske, M.: Process compliance analysis based on behavioural profiles. Inf. Syst. 36, 1009-1025 (11 2011)

**Claims**

1. A computer-implemented method of performing conformance diagnostics of traces $\sigma$ of an event log $L$ with a net representing a model of a process,

   The process comprising predetermined steps,
   the process comprising predetermined allowed variants of sequences of activities,
   the event log $L$ comprising traces $\sigma$, each trace being representative of a sequence of observed activities,

the traces $\sigma$ being representative of actual sequences of activities $a_i$
each activity $a_i$ being a step of the process,
the net being representable by a labeled accepting Petri net $N$,
whereby the labeled accepting Petri net $N$
*is a tuple $N = (P, T, F, I, m_0, m_f)$ where $P$ is the set of places, $T$ the set of transitions, $F \subseteq (P \times T) \cup (T \times P)$ is the flow*

*relation, $I : T \to \mathcal{U}_a \cup \{\tau\}$ is the labeling function, and $m_0$, $m_f \in \mathcal{B}$ (P) are its initial and final markings.*
wherein
$U_a$ representing the universe of activity labels $a$,
each transition of the set of transitions $T$ representing a step of the process,
the method comprising:

A step (A) of
instantiating a predetermined set of candidate constraints $Inst = \{C_i\}$ out of a library comprising predefined templates of constraints, a template being a function that returns a constraint for each A-tuple of activities, k being the number of template parameters,
each constraint c being defined as an object describing a language

$$\mathcal{L}(c) \subseteq \mathcal{U}_a^*$$

where $\mathcal{U}_a^*$ * denoting the Kleene operator applied on $U_a$
A step (B) of
determining, from the set of candidate constraints $Inst = \{C_i\}$, a set of constraints which are satisfied by all traces $\sigma$ in the Petri net's $N$ accepted language using the following relation holds:

$$\mathcal{L}(B_N) \subseteq \mathcal{L}(B_c)$$

with $B_N$ being the behavioral automaton of the Petri net $N$;
A step (C) of
removing redundant constraints from the set of satisfied constraints by searching for $C \subseteq U_C$ a minimal set of redundancy-free constraints C':

$$min_{C' \subset C} |C'| \ s.t. \ \forall c \in C, \ C' \to c$$

a constraint c being denoted redundant in a set of constraints $C$ if $\exists$ C;' $\subseteq$ C \{c} s.t. $\left( \bigcap_{c'_i \in C'} \mathcal{L}(c'_i) \right) \subseteq \mathcal{L}(c)$
a step (D) of
verifying the event log $L$ by checking whether the minimum set of constraints $C'$ is satisfied by the traces $\sigma$ of the event log $L$.

2.  The method of claim 1, further comprising:
    if a trace $\sigma$ is checked not to satisfy the minimum set of constraints $C'$, labeling the trace $\sigma$ in the event log $L$ as not satisfying the process described by the Petri net $N$.

3.  A computer-implemented method of determining a minimum set of constraints for conformance diagnostics of traces $\sigma$ of an event log $L$ with a net representing a model of a process, the process comprising predetermined steps,

    the traces $\sigma$ being representative of actual sequences of activities $a_i$
    each activity $a_i$ being a step of the process,
    the net being representable by a labeled accepting Petri net $N$,
    whereby the labeled accepting Petri net $N$
    *is a tuple $N = (P, T, F, I, m_0, m_f)$ where $P$ is the set of places, $\Gamma$ the set of transitions, $F \subseteq (P \times T) \cup (T \times P)$ is the flow*

    *relation, $I : T \to \mathcal{U}_a \cup \{\tau\}$ is the labeling function, and $m_0$, $m_f \in \mathcal{B}$ (P) are its initial and final markings.*

wherein

$U_a$ representing the universe of activity labels $a$,

each transition of the set of transitions $T$ representing a step of the process,

the method comprising:

A step (A) of

instantiating a predetermined set of candidate constraints $Inst= \{C_i\}$ out of a library comprising predefined templates of constraints, a template being a function that returns a constraint for each $k$-tuple of activities, $k$ being the number of template parameters,

each constraint c being defined as an object describing a language

$$\mathcal{L}(c) \subseteq \mathcal{U}_a^*$$

where $\mathcal{U}_a^*$ * denoting the Kleene operator applied on $U_a$

A step (B) of

determining, from the set of candidate constraints $Inst= \{C_i\}$, a set of constraints which are satisfied by all traces σ in the Petri net's $N$ accepted language using the following relation holds:

$$\mathcal{L}(B_N) \subseteq \mathcal{L}(B_c)$$

with $B_N$ being the behavioral automaton of the Petri net $N$;

A step (C) of

removing redundant constraints from the set of satisfied constraints by searching for $C \subseteq U_C$ a minimal set of redundancy-free constraints $C'$:

$$min_{C' \subset C}|C'| \; s.t. \; \forall c \in C, \; C' \to c$$

a constraint c being denoted redundant in a set of constraints $C$ if $\exists \, C'' \subseteq C \setminus \{c\}$ s.t. $\left( \bigcap_{c_i' \in C'} \mathcal{L}(c_i') \right) \subseteq \mathcal{L}(c)$.

4. The method according to one of the preceding claims, wherein in the determining step (B), the set of constraints is determined by:

for each constraint c of the set of candidate constraints $Inst= \{C_i\}$, computing a maximal set of activities $\Gamma$ for which the constraint $c$ is $\Gamma$-invariant, and

reducing the Petri net $N$ by the set $\Gamma$, thus obtaining the reduced Petri Net $N_{Ua \setminus \Gamma}$, and

checking whether the constraint c is satisfied by the reduced Petri net $N_{Ua \setminus \Gamma}$.

5. The method according to one of the preceding claims, wherein

the maximal set $\Gamma$ of activities for which a constraint c is $\Gamma$-invariant is determined by collecting all activities $\gamma$ for which the following condition holds:

$$\forall q \in Q, \gamma \in \Gamma : \delta(q, \gamma) = q$$

with $Q$ being the set of states of the DFA of the constraint c,

$q$ being a state of the set of states, $q \in Q$

$\delta$ being the transition function defined as $\delta : Q \times \Sigma \to Q$

where $\Sigma$ is the alphabet,

with $D$ being the minimal DFA of c defined as quintuple $D = (Q,$

$U_a, \delta, q_0, Q_f)$ such that $\mathcal{L}(c) = \mathcal{L}(D)$

$q_0$ being the initial state,

$Q_f$ being the set of final states.

6. The method according to one of the preceding claims, wherein searching a minimal set of redundancy-free constraints C' comprises executing the following algorithm:

Ordering all the constraints of the set of constraints $C$ according to a predefined order criterion, $<_C$,

$$c_i <_c c_j \quad \text{for all } 1 \le i < j \le m+1$$

$m$ being a predetermined maximum intersection size,

Checking all permutations of the ordered constraints

$$(c_1, c_2, \cdots, c_m, c_{m+1}) \in C^{m+1} \text{ s.t. } c_i <_r c_j \quad \text{for all } 1 \le i < j \le m+1$$

for redundant constraints,

such that

If $c_{m+1}$ is found to be redundant,

$$\{c_1, \cdots, c_m\} \to c_{m+1},$$

removing $c_{m+1}$ from the set of constraints, thus obtaining

$$C' \leftarrow C' \setminus \{c_{m+1}\}.,$$

checking the permutations being performed in lexicographical order of the combinations of the permutations.

7. The method according to one of the preceding claims, wherein a template of the set of predefined templates of constraints is a function

$$C: \mathcal{U}_a^k \to \mathcal{U}_C,$$

the function returning a constraint c for each A-tuple of activities $(a_1, a_2, ..., a_k) \in U_a^k$, where k is the number of template parameters.

8. The method according to one of the preceding claims, wherein the library of predefined templates of constraints is held in an electronic database.

9. The method according to one of the preceding claims, wherein

the behavioral automaton of the labeled accepting Petri net $N$ is defined as the unique minimal DFA $B_N$, such that $\mathcal{L}(N) = \mathcal{L}(B_N)$, the DFA being defined as a quintuple $D = (Q, \Sigma, \delta, q_0, F)$ where $Q$ is the set of states, $\Sigma$ is the alp habet , $\delta : Q \times \Sigma \to Q$ is the transition function, $q_0$ is the initial state and $Q_f \subseteq Q$ is the set of final states.

10. The method according to one of the preceding claims, wherein the Petri net $N$ is a bounded Petri net.

11. The method according to one of the preceding claims, wherein the minimum set of constraints is an approximative minimum set of constraints.

12. A computer-implemented method of performing conformance diagnostics of traces $\sigma$ of an event log $L$ with a net representing a model of a process,

the process comprising predetermined allowed variants of sequences of activities,
the event log *L* comprising traces σ, each trace being representative of a sequence of observed activities,
the net being representable by a labeled accepting Petri net *N*,
the method comprising:
a step (D) of verifying the event log *L* by checking whether the minimum set of constraints *C'* obtained by the method of one of the claims 3-11 is satisfied by the traces σ of the event log *L*.

13. The method of claim 12, further comprising:
if a trace σ is checked not to satisfy the minimum set of constraints C', labeling the trace σ in the event log *L* as not satisfying the process described by the Petri net *N*.

14. A machine-readable storage medium comprising instructions which when loaded into a computer system controls the computer system to perform the method according to one of the preceding claims.

15. A computer program comprising instructions which, when the program is executed by a computer, cause the computer to perform the method according to one of claims 1-13.

Fig. 1

Fig. 2

Fig. 3

Fig. 4

Europäisches
Patentamt
European
Patent Office
Office européen
des brevets

# EUROPEAN SEARCH REPORT

**Application Number**

EP 24 19 7784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUDEWIJN VAN DONGEN ET AL: "Conformance Checking of Mixed-paradigm Process Models", ARXIV.ORG, CORNELL UNIVERSITY LIBRARY, 201 OLIN LIBRARY CORNELL UNIVERSITY ITHACA, NY 14853, 23 November 2020 (2020-11-23), XP081819243, * page 8, paragraph 2; figure 3 * * page 14, paragraph 3 * * page 12 * * page 14 - page 17 * * page 25 * | 1-15 | INV. G06Q10/0633 |
| X | ADRIAN REBMANN ET AL: "Mining Constraints from Reference Process Models for Detecting Best-Practice Violations in Event Log", ARXIV.ORG, CORNELL UNIVERSITY LIBRARY, 201 OLIN LIBRARY CORNELL UNIVERSITY ITHACA, NY 14853, 2 July 2024 (2024-07-02), XP091807118, * the whole document * | 1-15 | |
| T | GOULART ROCHA EDUARDO ET AL: "Mining Behavioral Patterns for Conformance Diagnostics", 2 September 2024 (2024-09-02), BUSINESS PROCESS MANAGEMENT; [LECTURE NOTES IN COMPUTER SCIENCE; LECT.NOTES COMPUTER], SPRINGER NATURE SWITZERLAND, CHAM, PAGE(S) 291 - 308, XP047707892, ISSN: 0302-9743 ISBN: 978-3-031-70395-9 [retrieved on 2024-09-02] * the whole document * | | |

**TECHNICAL FIELDS SEARCHED (IPC)**

G06Q

The present search report has been drawn up for all claims

| Place of search | Date of completion of the search | Examiner |
|---|---|---|
| Munich | 13 February 2025 | Koblitz, Birger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 703 990 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **VAN DER AALST, W.** Data Science in Action. Springer, 2016, 3-23
- **ADRIANSYAH, A.** ; **VAN DONGEN, B.** ; **VAN DER AALST, W.** Conformance checking using cost-based fitness analysis. *2011 IEEE 15th International Enterprise Distributed Object Computing Conference*, 2011, 55-64
- Controlling break-the-glass through alignment. **ADRIANSYAH, A.** ; **VAN DONGEN, B.F.** ; **ZANNONE, N.** 2013 International Conference on Social Computing. IEEE, 2013, 606-611
- Rule mining with rum. **ALMAN, A.** ; **DI CICCIO, C.** ; **HAAS, D.** ; **MAGGI, F.M.** ; **NOLTE, A.** 2nd International Conference on Process Mining (ICPM). IEEE, 2020, 121-128
- **CARMONA, J.** ; **VAN DONGEN, B.F.** ; **SOLTI, A.** ; **WEIDLICH, M.** Conformance Checking - Relating Processes and Models. Springer, 2018
- **DESEL, J.** ; **ESPARZA, J.** Free choice Petri nets.. Cambridge university press, 1995
- **DI CICCIO, C.** ; **MAGGI, F.M.** ; **MONTALI, M.** ; **MENDLING, J.** Resolving inconsistencies and redundancies in declarative process models. *Inf. Sys.*, 2017, vol. 64, 425-446
- **DI CICCIO, C.** ; **MAGGI, F.M.** ; **MONTALI, M.** ; **MENDLING, J.** On the relevance of a business constraint to an event log. *Information Systems*, 2018, vol. 78, 144-161
- **DIJKMAN, R.M.** ; **DUMAS, M.** ; **OUYANG, C.** Semantics and analysis of business process models in BPMN. *Inf. Softw. Technol.*, 2008, vol. 50 (12), 1281-1294
- **VAN DONGEN, B.** *BPI challenge*, 2015
- **ESPARZA, J.** ; **BLONDIN, M.** Automata theory: An algorithmic approach. MIT Press, 2023
- **GARCÍA-BANUELOS, L.** ; **VAN BEEST, N.R.** ; **DUMAS, M.** ; **ROSA, M.L.** ; **MERTENS, W.** Complete and inter-pretable conformance checking of business processes. *IEEE Transactions on Software Engineering*, 2018, vol. 44 (3), 262-290
- SAP R/3 Process-oriented Implementation: Iterative Process Prototyping. **KELLER, G.** ; **TEUFEL, T.** SAP databases. Addison Wesley Longman, 1998
- Discovering block-structured process models from event logs containing infrequent behaviour.. **LEEMANS, S.J.J.** ; **FAHLAND, D.** ; **VAN DER AALST, W.M.P.** Business Process Management Workshops. Springer, 2014, 66-78
- **LEEMANS, S.J.J.** ; **FAHLAND, D.** ; **VAN DER AALST, W.M.P.** Scalable process discovery and conformance checking. *Software and Systems Modeling*, 2016, vol. 17, 599-631
- **DE LEONI, M.** ; **MAGGI, F.** ; **VAN DER AALST, W.** *Aligning event logs and declarative process models for conformance checking*, January 2012, 82-97
- **DE LEONI, M.** ; **MANNHARDT, F.** *Road traffic fine management process*, February 2015
- Efficient discovery of understandable declarative process models from event logs. **MAGGI, F.M.** ; **BOSE, R.P.J.C.** ; **VAN DER AALST, W.M.P.** Advanced Information Systems Engineering. Springer, 2012, 270-285
- **MANNHARDT, F.** ; **DE LEONI, M.** ; **REIJERS, H.A.** ; **VAN DER AALST, W.M.** Balanced multi-perspective checking of process conformance. *Computing*, 2016, vol. 98, 407-437
- **MOZAFARI MEHR, A.S.** ; **M. DE CARVALHO, R.** ; **VAN DONGEN, B.** Explainable conformance checking: Understanding patterns of anomalous behavior. *Engineering Applications of Artificial Intelligence*, 2023, vol. 126, 106827
- **MUNOZ-GAMA, J.** ; **CARMONA, J.** ; **VAN DER AALST, W.** Single-entry single-exit decomposed conformance checking. *Information Systems*, 2014, vol. 46, 102-122
- **MURATA, T.** Petri nets: Properties, analysis and applications. *Proceedings of the IEEE*, 1989, vol. 77 (4), 541-580
- **PELED, D.** ; **WILKE, T.** Stutter-invariant temporal properties are expressible without the next-time operator. *Information Processing Letters*, 1997, vol. 63 (5), 243-246
- **PESIC, M.** ; **SCHONENBERG, H.** ; **VAN DER AALST, W.M.P.** Declare: Full support for loosely-structured processes. *11th IEEE International Enterprise Distributed Object Computing Conference (EDOC 2007*, 2007, 287-287
- Diagnostic information in compliance checking. **RAMEZANI, E.** ; **FAHLAND, D.** ; **VAN DER AALST, W.M.** Tech. rep.. Citeseer, 2012
- Declarative modeling-an academic dream or the future for bpm?. **REIJERS, H.A.** ; **SLAATS, T.** ; **STAHL, C.** Business Process Management - 11th International Conference, BPM. Lecture Notes in Computer Science. Springer, 2013, vol. 8094, 307-322

- **ROZINAT, A.** ; **VAN DER AALST, W.** Conformance checking of processes based on monitoring real behavior. *Information Systems*, 2008, vol. 33 (1), 64-95

- **WEIDLICH, M.** ; **POLYVYANYY, A.** ; **DESAI, N.** ; **MENDLING, J.** ; **WESKE, M.** Process compliance analysis based on behavioural profiles. *Inf. Syst.*, November 2011, vol. 36, 1009-1025